# FASCICULE DE BREVET EUROPEEN

(11) **EP 0 926 975 B1**
(45) Date de publication et mention de la délivrance du brevet: **25.09.2002**
(21) Numéro de dépôt: 97940216.1
(22) Date de dépôt: 10.09.1997
(51) Int. Cl.: A47J 43/07

(54) **APPAREIL ELECTROMENAGER POUR LE TRAITEMENT D'ALIMENTS COMPORTANT UN DISPOSITIF DE RANGEMENT DES OUTILS DE TRAVAIL**
HAUSHALTSELEKTROGERÄT ZUR NAHRUNGSMITTELVERARBEITUNG MIT EINER VORRICHTUNG ZUM AUFBEWAHREN DER WERKZEUGE
ELECTRIC HOUSEHOLD APPLIANCE FOR PROCESSING FOOD COMPRISING A DEVICE FOR STORING COOKING EQUIPMENT

(30) Priorité: 20.09.1996 FR 9611520
(43) Date de publication de la demande: 07.07.1999
(73) Titulaire: MOULINEX S.A., 75008 Paris (FR)
(72) Inventeur: MARRIERE, Marc, F-53300 Ambrières les Vallées (FR); LEVERRIER, Bruno, F-50110 Lassay les Chateaux (FR)
(74) Mandataire: Busquets, Jean-Pierre
(86) Numéro de dépôt international: FR9701602
(87) Numéro de publication internationale: WO98011810

(56) Documents cités:
- EP-A- 0 058 118
- US-A- 4 334 724
- US-A- 4 387 860

## Description

La présente invention concerne un appareil électroménager pour le traitement d'aliments, du type connu sous le nom de robot de cuisine, comportant un boîtier renfermant un groupe moteur et présentant une région formant embase sur laquelle est monté amovible un bol dont le fond est traversé par un arbre d'entraînement du groupe moteur, divers outils rotatifs de travail remplissant des fonctions différentes et montés alternativement de manière amovible dans le bol en venant s'accoupler avec ledit arbre d'entraînement, ainsi qu'un dispositif permettant de ranger les outils lorsqu'aucun de ceux-ci n'est utilisé.

Dans un tel appareil électroménager, les différentes fonctions spécialisées de traitement des aliments, telles que hachage, mixage, râpage, éminçage ou coupe de fruits ou légumes, sont accomplies par divers outils rotatifs appropriés qui sont entraînés en rotation dans le bol de travail par le moteur de manière à effectuer les diverses opérations de traitement choisies par l'utilisateur.

Avec cet appareil électroménager de traitement des aliments qui fait intervenir une multiplicité d'outils dont un seul est utilisé pour chaque opération, on est alors confronté au problème du rangement des divers outils lorsqu'aucun de ceux-ci n'est utilisé, c'est-à-dire lorsque l'appareil n'est pas en service. Pour résoudre ce problème, on a alors proposé de concevoir un coffret de rangement des outils qui peut être entièrement indépendant de l'appareil proprement dit, ou encore être rapporté latéralement sur le boîtier de l'appareil. Un tel coffret de rengement est divulgué dans US-A-4 387 860. Dans tous les cas, un tel coffret constitue une pièce supplémentaire qui présente l'inconvénient d'être particulièrement encombrante.

L'invention se propose, par suite, de résoudre d'une manière simple et efficace ce problème du rangement des outils lorsque ceux-ci ne sont pas utilisés.

Selon l'invention, ce but est atteint par un appareil électroménager pour le traitement d'aliments, du type décrit précédemment, qui est caractérisé en ce que le dispositif de rangement comporte une pièce porte-outils qui est montée amovible dans le bol.

Ainsi, on comprend que lorsqu'aucun outil n'est utilisé, le fait de loger la pièce portant les outils à l'intérieur même du bol reposant sur l'embase du boîtier de l'appareil, permet désormais de ranger les divers outils sans souci d'encombrement de la pièce porte-outils. De plus, le bol de l'appareil sert avantageusement en soi à la fois de récipient de travail des divers outils pour le traitement des aliments lorsque l'appareil est en service, et de coffret de rangement de la pièce porte-outils lorsque l'appareil n'est pas en service.

Selon un mode de réalisation préféré, la pièce porte-outils comporte un plateau circulaire percé d'une pluralité d'alvéoles logeant de manière amovible certains types d'outils et dont la face supérieure est surmontée verticalement en son centre d'un fût creux de forme générale approximativement cylindrique qui débouche de la face inférieure du plateau et sur lequel sont montés amovibles d'autres types d'outils, l'ensemble portant les outils et formé par le plateau et le fût étant monté dans le bol par engagement du débouché dudit fût autour d'une monture centrale s'étendant verticalement sur le fond du bol et propre à recevoir l'arbre du groupe moteur.

Les caractéristiques et avantages de l'invention ressortiront d'ailleurs de la description qui va suivre, à titre d'exemple non limitatif, en référence aux dessins annexés dans lesquels :
- la figure 1 est une vue schématique en perspective d'un appareil électroménager pour le traitement d'aliments et comportant un couteau-hachoir ;
- la figure 2 est une vue en perspective, à échelle agrandie, du couteau-hachoir de la figure 1 ;
- la figure 3 est une vue en perspective d'un disque destiné à supporter divers types d'outils ;
- la figure 4 est une vue schématique en perspective éclatée d'une partie de l'appareil électroménager comportant un dispositif de rangement des outils selon l'invention ;
- la figure 5 est une vue analogue à la figure 1 montrant schématiquement le dispositif de rangement des outils de la figure 4 ;
- la figure 6 est une vue en perspective, à échelle agrandie, d'une pièce du dispositif de rangement de la figure 4, les outils n'étant pas en place ;
- la figure 7 est une vue en coupe selon la ligne VII-VII de la figure 6, les outils étant en place ;
- la figure 8 est une vue en coupe selon la ligne VIII-VIII de la figure 6, les outils étant en place ; et
- la figure 9 est une vue de dessus de la pièce de la figure 6, seul le couteau-hachoir étant en place.

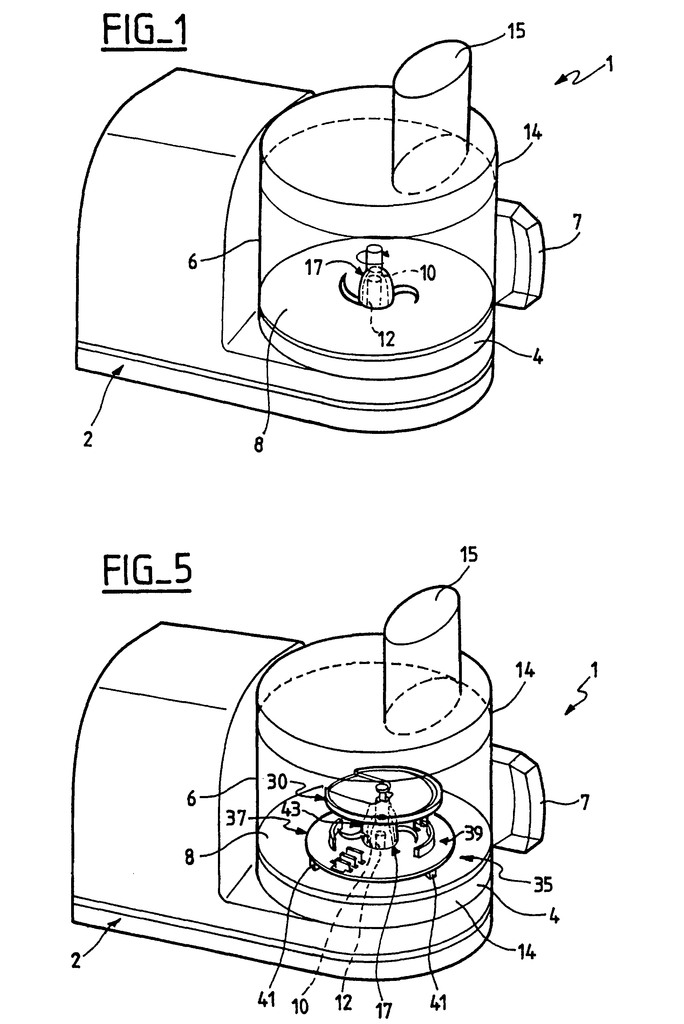

Comme représenté à la figure 1, l'appareil électroménager 1 pour le traitement des aliments, appelé robot de cuisine, comporte un boîtier 2 ayant une forme générale de L qui renferme un groupe moteur (non figuré) et qui présente une région formant embase 4. Sur cette embase 4 est monté amovible un bol ou récipient de travail 6 réalisé en matière plastique transparente, pourvu d'une poignée 7 et dont le fond 8 comporte une monture centrale verticale 10 débouchant dudit fond 8, qui est entraînée en rotation par un arbre d'entraînement 12 du groupe moteur faisant verticalement saillie de l'embase 4, et sur laquelle sont montés alternativement de façon amovible divers outils rotatifs de travail de manière que ceux-ci soient entraînés en rotation par la monture 10 et puissent effectuer différentes opérations de traitement des aliments, telles que hachage, mixage, râpage, éminçage ou coupe de fruits ou légumes, selon le souhait de l'utilisateur.

Sur la figure 1, un couvercle amovible 14 est fixé sur la partie supérieure du bol 6 pendant l'utilisation. Ce couvercle 14 comprend une trémie ou tube d'alimentation 15 qui traverse le couvercle pour déboucher dans la partie supérieure du bol 6 et dans lequel sont introduits les aliments à préparer.

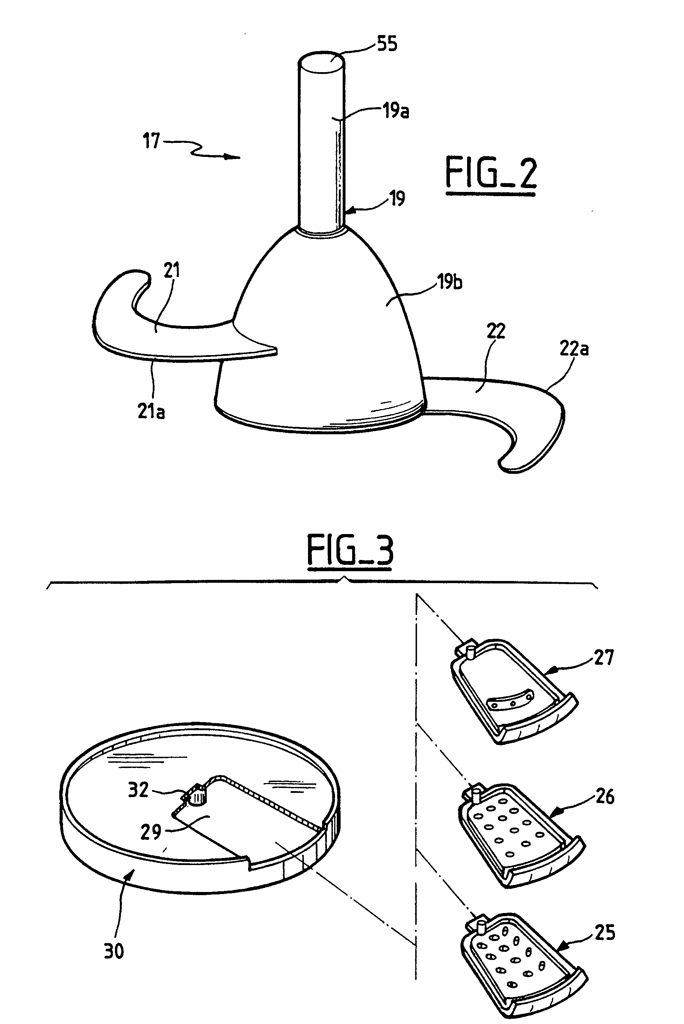

Comme type d'outil rotatif de traitement des aliments, on a représenté à la figure 1 un couteau 17 de hachage ou de mixage d'aliments qui est fixé sur la monture d'entraînement 10. Comme le montre la figure 2, ce couteau 17 comprend un arbre tubulaire vertical 19 présentant, dans cet exemple de réalisation, une partie cylindrique 19a se prolongeant vers le bas par une partie 19b en forme de cloche, ainsi que deux lames horizontales, l'une supérieure 21 et l'autre inférieure 22, solidaires de la partie 19b de l'arbre 19 et présentant chacune une forme de croissant dont la partie convexe constitue la partie coupante 21a, respectivement 22a.

Sur la figure 3, on a représenté à titre purement illustratif et nullement limitatif, trois types différents d'outils interchangeables de traitement d'aliments, à savoir un coupe-légumes 25, une râpe 26 et un outil d'éminçage 27. Dans cet exemple de réalisation, figure 3, chacun des trois outils de travail 25, 26 et 27 présente une forme de secteur circulaire venant s'insérer, au choix de l'utilisateur, dans une découpe de même forme 29 pratiquée dans un disque support rotatif 30. Lors de l'utilisation de l'appareil, le disque 30 équipé de l'outil choisi 25;26;27 est fixé sur la monture d'entraînement 10 par engagement sur celle-ci d'une ouverture centrale 32 pratiquée dans le disque 30, de manière que l'outil 25;26;27 solidaire du disque 30 soit entraîné en rotation pour accomplir l'opération de traitement qui lui est dévolue.

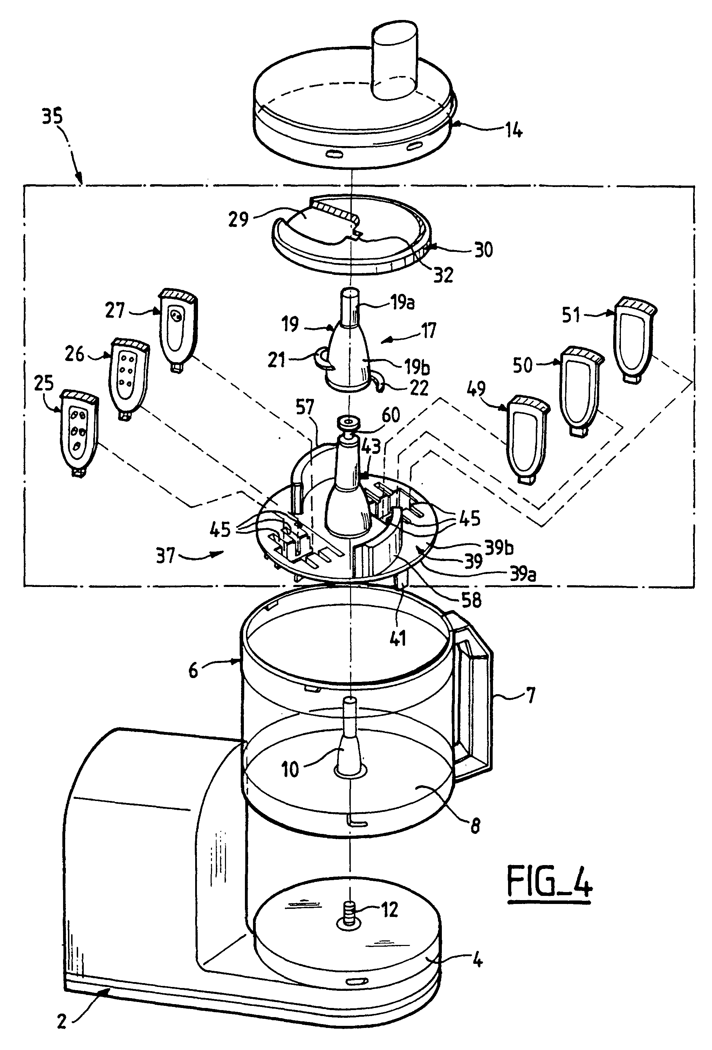

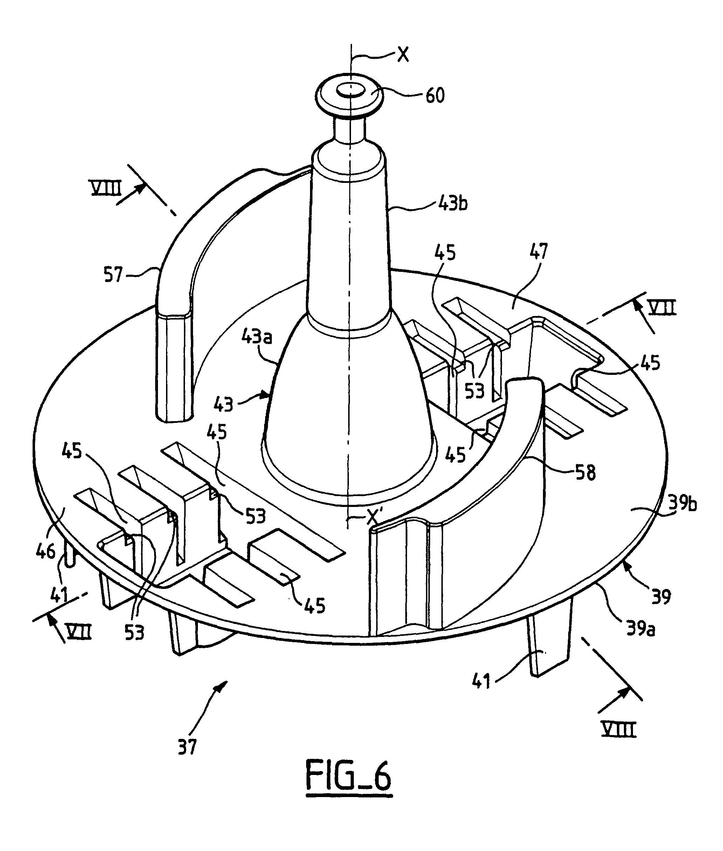

L'appareil électroménager comporte de plus un dispositif, désigné par la référence générale 35 sur les figures 4 et 5, permettant de ranger les divers outils, à savoir présentement le couteau-hachoir 17, le coupe-légumes 25, la râpe 26 et l'outil d'éminçage 27, ainsi que le disque 30 de support de chacun des trois derniers outils précités, lorsqu'aucun de ces outils n'est utilisé, c'est-à-dire lorsque l'appareil n'est pas en service.

Selon l'invention, ce dispositif 35 de rangement des outils comporte une pièce porte-outils 37 qui est montée amovible dans le bol 6.

Comme le montre la figure 5, la pièce porte-outils 37 s'étend verticalement sur une hauteur qui est inférieure à celle du bol 6 de manière que la pièce 37 soit emprisonnée dans le bol 6 lorsque celui-ci est fermé par le couvercle 14, protégeant ainsi l'accès direct à la pièce porte-outils 37.

On comprend que le bol 6 de l'appareil sert avantageusement à la fois de bol de travail des divers outils pour le traitement des aliments lorsque l'appareil 1 est en service (voir figure 1) et de bol de rangement de la pièce porte-outils 37 lorsque l'appareil 1 n'est pas en service (voir figure 5).

Dans l'exemple de réalisation représenté à la figure 4 et comme on le voit mieux à la figure 6, la pièce porte-outils 37 comporte un plateau circulaire 39 dont la face inférieure 39a est munie à sa périphérie d'une pluralité de pattes verticales 41 venant en appui sur le fond 8 du bol 6 lors du montage de la pièce 37 dans le bol 6 de l'appareil (voir figure 5), et dont la face supérieure 39b est surmontée en son centre d'un fût creux 43, d'axe de symétrie vertical XX', qui débouche de la face inférieure 39a du plateau 39 et présentant, dans cet exemple de réalisation, une partie 43a en forme de cloche se prolongeant vers le haut par une partie cylindrique 43b, voir figure 6.

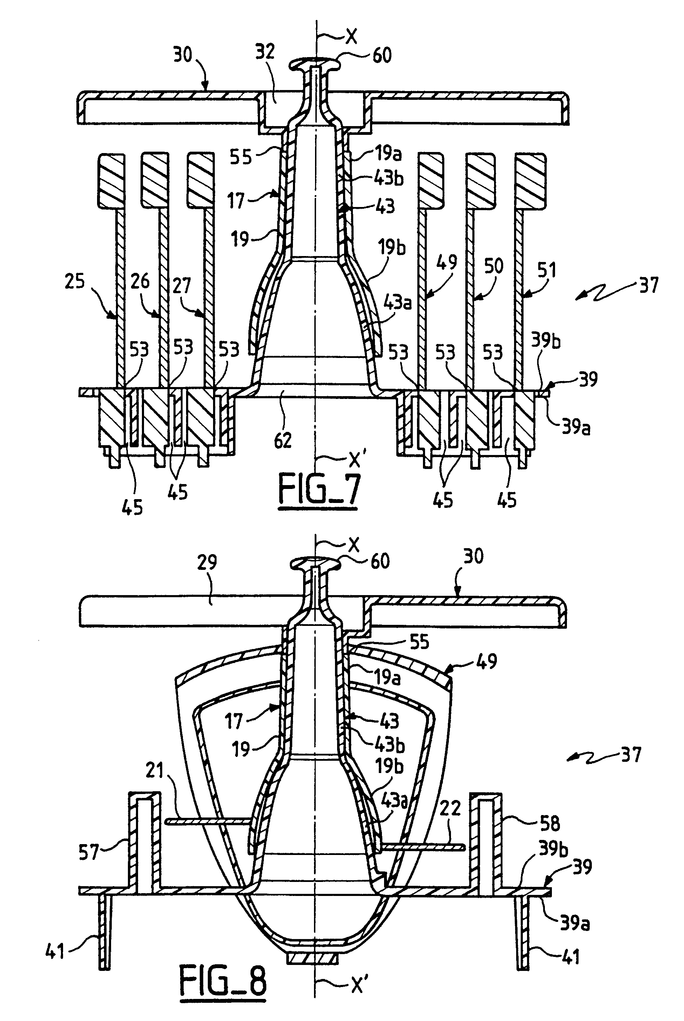

En regard des figures 4, 6 et 7, le plateau 39 est percé d'une pluralité d'alvéoles identiques 45, ici au nombre de six, de forme générale rectangulaire, s'étendant parallèlement les uns aux autres en étant répartis d'une manière égale dans deux régions, notées 46 et 47 sur la figure 6, qui sont diamétralement opposées par rapport à l'axe XX' du fût 43, et à travers lesquels sont engagés verticalement, par leur partie rétrécie, les outils de travail en forme de secteur circulaire, au nombre de six dans l'exemple choisi représenté sur les figures 4 et 7, constitués respectivement par les trois outils 25, 26 et 27 mentionnés précédemment et par trois autres types d'outils 49, 50 et 51 qui, eux, sont engagés par leur face opposée à celle des trois outils précédents. Chaque outil 25-27 et 49-51 est maintenu verticalement en place dans l'alvéole correspondant 45 par appui de sa partie élargie contre les bords internes 53 de l'alvéole 45 (voir figure 7).

En regard des figures 4, 7 et 8, le fût 43 de la pièce porte-outils 37 est adapté dimensionnellement à recevoir par enfilage, d'abord l'arbre 19 du couteau-hachoir 17 qui laisse libre la région haute de la partie cylindrique 43b du fût 43, puis le disque support 30 à découpe 29 sur cette région haute en venant en appui sur l'extrémité supérieure 55 (figures 7 et 8) de la partie cylindrique 19a du couteau-hachoir 17 et en s'étendant horizontalement au-dessus des outils en forme de secteur circulaire 25-27 et 49-51, à distance de ceux-ci, comme on le voit bien à la figure 7.

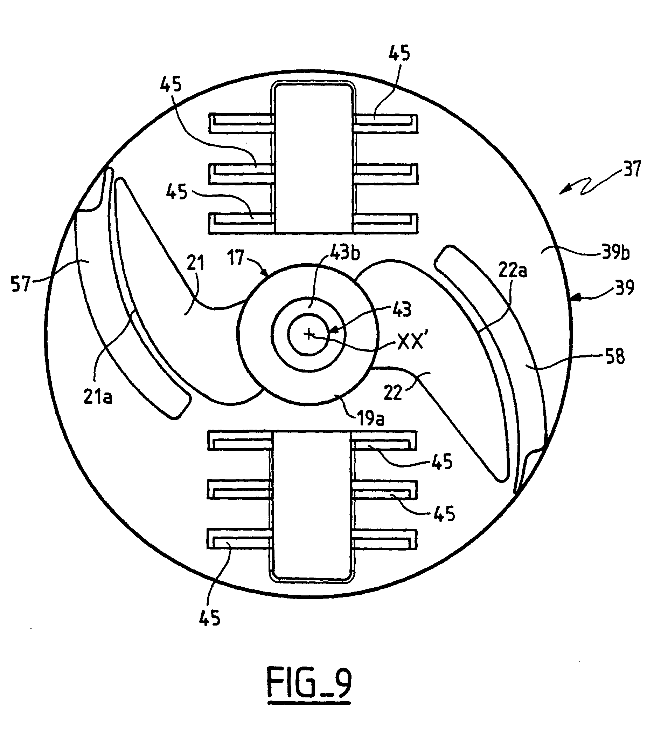

En se reportant aux figures 6, 8 et 9, la face supérieure 39b du plateau 39 est surmontée verticalement de deux ailes convexes 57 et 58 qui bordent respectivement les deux parties coupantes 21a et 22a des lames 21 et 22 du couteau-hachoir 17 une fois enfilé sur le fût 43 (voir figure 9) en se dressant notablement au-dessus des deux lames 21 et 22, comme visible à la figure 8, protégeant ainsi l'utilisateur contre toute blessure par les lames coupantes du couteau 17.

On a désigné en 60 sur les figures 4, 6, 7 et 8 un organe de préhension en forme de queue qui est ménagée à l'extrémité supérieure du fût 43 et qui permet à l'utilisateur de saisir aisément la pièce porte-outils 37.

De préférence, le plateau 39, le fût 43, les pattes 41, les ailes de protection 57 et 58, ainsi que l'organe de préhension 60, sont moulés d'une seule pièce en matière plastique, telle qu'un polypropylène qui est particulièrement économique et d'un nettoyage facile.

En regard de la figure 4, après engagement des outils de travail en forme de secteur 25-27 et 49-51 dans les alvéoles 45 du plateau 39 et après enfilage, d'abord du couteau-hachoir 17, puis du disque support 30, sur le fût 43, l'ensemble ainsi formé et constituant la pièce porte-outils 37 est monté dans le bol 6 par engagement du débouché 62 (figure 7) du fût 43 autour de la monture 10, les pattes 41 du plateau 39 venant en appui sur le fond 8 du bol 6 ; le bol 6 logeant ainsi la pièce porte-outils 37 est fermé par le couvercle 14, comme illustré à la figure 5. Les divers outils sont donc rangés dans le bol même de l'appareil, rendant nullement encombrante la pièce porte-outils 37.

Lors de l'utilisation de l'un quelconque des outils une fois rangés, l'utilisateur extrait, après ouverture du couvercle 14, la pièce porte-outils 37 du bol 6, puis fixe l'outil de travail choisi sur la monture d'entraînement 10 solidaire du fond du bol 6, comme par exemple le couteau-hachoir 17 tel que montré à la figure 1.

## Revendications

1. Appareil électroménager pour le traitement d'aliments, comportant un boîtier (2) renfermant un groupe moteur et présentant une région formant embase (4) sur laquelle est monté amovible un bol (6) dont le fond (8) est traversé par un arbre d'entraînement (12) du groupe moteur, divers outils rotatifs de travail (17, 25 à 27, 49 à 51) remplissant des fonctions différentes et montés alternativement de manière amovible dans le bol (6) en venant s'accoupler avec ledit arbre d'entraînement (12), ainsi qu'un dispositif (35) permettant de ranger les outils lorsqu'aucun de ceux-ci n'est utilisé,
**caractérisé en ce que** le dispositif de rangement (35) comporte une pièce porte-outils (37) qui est montée amovible dans ledit bol (6).

2. Appareil électroménager selon la revendication 1, dans lequel le bol (6) est muni d'un couvercle de fermeture (14),
**caractérisé en ce que** la pièce porte-outils (37) s'étend verticalement sur une hauteur qui est inférieure à celle du bol (6) de manière que ladite pièce (37) soit emprisonnée dans le bol (6) lorsque celui-ci est fermé.

3. Appareil électroménager selon la revendication 1 ou 2,
**caractérisé en ce que** la pièce porte-outils (37) comporte un plateau circulaire (39) percé d'une pluralité d'alvéoles (45) logeant de manière amovible certains types d'outils (25 à 27, 49 à 51) et dont la face supérieure (39b) est surmontée verticalement en son centre d'un fût creux (43) de forme générale approximativement cylindrique qui débouche de la face inférieure (39a) du plateau (39) et sur lequel sont montés amovibles d'autres types d'outils (17,30), l'ensemble portant les outils et formé par le plateau (39) et le fût (43) étant monté dans le bol (6) par engagement du débouché (62) dudit fût (43) autour d'une monture centrale (10) s'étendant verticalement sur le fond (8) du bol (6) et propre à recevoir l'arbre (12) du groupe moteur.

4. Appareil électroménager selon la revendication 3, dans lequel les outils sont, d'une part, un coupe-légumes (25), différents types de râpes (26) et analogues qui sont constitués chacun par une pièce de travail en forme de secteur circulaire venant s'insérer, lors de son utilisation, dans une découpe (29) de même forme pratiquée dans un disque (30) présentant une ouverture centrale (32), et d'autre part, un couteau (17) solidaire d'un arbre tubulaire (19) de forme générale approximativement cylindrique,
**caractérisé en ce que** les pièces en forme de secteur (25,26) sont engagées verticalement, par leur partie rétrécie, à travers les alvéoles (45) dont les bords internes (53) retiennent la partie restante de la pièce en forme de secteur, l'arbre porte-couteau (19) est enfilé sur le fût (43) en laissant libre la partie haute de ce dernier, et le disque (30) est enfilé sur la partie haute du fût (43) en venant en appui sur l'extrémité supérieure (55) de l'arbre porte-couteau (19) et en s'étendant horizontalement au-dessus desdites pièces en forme de secteur (25,26).

5. Appareil électroménager selon la revendication 4, dans lequel le couteau (17) comprend deux lames horizontales (21,22) en forme de croissant dont la partie convexe constitue la partie coupante (21a,22a),
**caractérisé en ce que** la face supérieure (39b) du plateau (39) est surmontée verticalement de deux ailes convexes de protection (57,58) qui bordent respectivement les deux parties coupantes (21a,22a) des lames en se dressant notablement au-dessus de celles-ci.

6. Appareil électroménager selon l'une des revendications 3 à 5,
**caractérisé en ce que** les alvéoles (45) présentent une forme générale rectangulaire, s'étendent parallèlement les uns aux autres et sont répartis dans deux régions (46,47) diamétralement opposées par rapport à l'axe vertical (XX') du fût (43).

7. Appareil électroménager selon l'une des revendications 3 à 6,
**caractérisé en ce que** le plateau (39) est muni sur sa face inférieure (39a) d'une pluralité de pattes verticales (41) venant en appui sur le fond (8) du bol (6).

8. Appareil électroménager selon l'une des revendications 3 à 7,
**caractérisé en ce qu**'un organe de préhension (60) est prévu à l'extrémité supérieure du fût (43).

9. Appareil électroménager selon l'une quelconque des revendications précédentes,
**caractérisé en ce que** la pièce porte-outils (37) est réalisée par moulage en une matière plastique, telle qu'un polypropylène.

## Patentansprüche

1. Haushaltselektrogerät zur Verarbeitung von Nahrungsmitteln mit einem Gehäuse (2), das ein Antriebsaggregat umschließt und einen einen Sockel (4) bildenden Bereich aufweist, auf dem abnehmbar eine Schüssel (6) montiert ist, deren Boden (8) von einer Antriebswelle (12) des Antriebsaggregats durchsetzt wird, mit verschiedenen Arbeitswerkzeugen (17, 25 - 27, 49 - 51), welche verschiedene Funktionen erfüllen und alternativ abnehmbar in der Schüssel (6) montiert sind, wobei sie mit der Antriebswelle (12) gekuppelt werden, sowie mit einer Vorrichtung (35) zur Aufbewahrung der Werkzeuge, wenn keines von ihnen benutzt wird, **dadurch gekennzeichnet, daß** die Aufbewahrungsvorrichtung (35) ein Werkzeugträgerteil (37) aufweist, das in der Schüssel (6) abnehmbar montiert ist.

2. Haushaltselektrogerät nach Anspruch 1, worin die Schüssel (6) mit einem Verschlußdeckel (14) versehen ist, **dadurch gekennzeichnet, daß** das Werkzeugträgerteil (37) sich vertikal über eine Höhe erstreckt, die geringer ist als die der Schüssel (6), so daß das Teil (37) in der Schüssel (6) eingeschlossen ist, wenn diese verschlossen ist.

3. Haushaltselektrogerät nach Anspruch 1 oder 2, **dadurch gekennzeichnet, daß** das Werkzeugträgerteil (37) eine kreisförmige Platte (39) aufweist, die durch eine Mehrzahl von Zellen (45) durchbrochen ist, welche abnehmbar bestimmte Typen von Werkzeugen (25 - 27, 49 - 51) aufnehmen, und von deren Oberseite sich in deren Mitte vertikal ein hohler Schaft (43) von im ganzen etwa zylindrischer Form erstreckt, der an der Unterseite (39a) der Platte (39) mündet und auf dem abnehmbar andere Typen von Werkzeugen (17, 30) montiert sind, wobei die Gesamtanordnung, welche die Werkzeuge trägt und von der Platte (39) und dem Schaft (43) gebildet wird, in der Schüssel (6) durch Eingriff der Mündung (62) des Schafts (43) um eine Mittelfassung (10) montiert ist, die sich vertikal auf dem Boden (8) der Schüssel (6) erstreckt und zur Aufnahme der Welle (12) des Antriebsaggregats eingerichtet ist.

4. Haushaltselektrogerät nach Anspruch 3, worin die Werkzeuge einerseits ein Gemüseschneider (25), verschiedene Typen von Reiben (26) und analoge Werkzeuge sind, die jedes aus einem Arbeitsteil in Form eines Kreissektors bestehen, der zu seiner Benutzung in einen Ausschnitt (29) von gleicher Form eingesetzt wird, der in einer Scheibe (30), die eine Mittelöffnung (32) besitzt, ausgebildet ist und andererseits ein Messer (17) sind, das fest mit einer rohrförmigen Welle (19) von im ganzen etwa zylindrischer Form verbunden ist, **dadurch gekennzeichnet, daß** die sektorförmigen Teile *(25,* 26) mit ihrem verjüngten Teil durch die Zellen (45) eingesetzt sind, deren Innenkanten (53) den verbleibenden Teil des sektorförmigen Teils zurückhalten, die Messerträgerwelle (19) auf den Schaft (43) aufgeschoben wird, indem der obere Teil desselben freibleibt, und die Scheibe (30) auf den oberen Teil des Schafts (43) aufgezogen wird, wobei sie sich auf dem oberen Ende (55) der Messerträgerwelle (19) abstützt und sich horizontal oberhalb der sektorförmigen Teile (25, 26) erstreckt.

5. Haushaltselektrogerät nach Anspruch 4, worin das Messer (17) zwei horizontale Klingen (21, 22) in Sichelform aufweist, deren konvexer Teil den Schneidteil bildet (21a, 22a), **dadurch gekennzeichnet, daß** sich von der Oberseite (39b) der Platte (39) vertikal zwei konvexe Schutzflügel (57. 58) erstrecken, die jeweils an die zwei Schneidteile (21a, 22a) der Klingen angrenzen und sich dabei bis deutlich oberhalb derselben erstrecken.

6. Haushaltselektrogerät nach einem der Ansprüche 3 bis 5, **dadurch gekennzeich-net, daß** die Zellen (45) eine im ganzen rechteckige Form aufweisen, sich zueinander parallel erstrecken und in zwei bezüglich der vertikalen Achse (XX') des Schafts (43) diametral entgegengesetzten Bereichen (46, 47) verteilt sind.

7. Haushaltselektrogerät nach einem der Ansprüche 3 bis 6, **dadurch gekennzeichnet, daß** die Platte (39) an ihrer Unterseite (39a) mit einer Mehrzahl von vertikalen Füßen (41) versehen ist, die sich auf dem Boden (8) der Schüssel (6) abstützen.

8. Haushaltselektrogerät nach einem der Ansprüche 3 bis 7, **dadurch gekennzeichnet, daß** ein Griffelement (60) am oberen Ende des Schafts (43) vorgesehen ist.

9. Haushaltselektrogerät nach einem der vorangehenden Ansprüche, **dadurch gekennzeichnet, daß** das Werkzeugträgerteil (37) durch Formen aus einem Kunststoff, wie einem Polypropylen, hergestellt ist.

## Claims

1. Domestic electrical appliance for food processing, comprising a casing (2) containing a motor unit and having a region forming a base (4) on which there is removably mounted a bowl (6) whose bottom (8) has a drive shaft (12) for the motor unit passing through it, various rotating working tools (17, 25 to 27, 49 to 51) fulfilling different functions and removably mounted in alternation in the bowl (6) whilst coming to be coupled with the said drive shaft (12), and a device (35) for storing the tools when none of these is being used, **characterised in that** the storage device (35) has a tool-holder piece (37) which is removably mounted in the said bowl (6).

2. Domestic electrical appliance according to Claim 1, in which the bowl (6) is provided with a closure cover (14), **characterised in that** the tool-holder piece (37) extends vertically over a height which is less than that of the bowl (6) so that the said piece (37) is trapped in the bowl (6) when the latter is closed.

3. Domestic electrical appliance according to Claim 1 or 2, **characterised in that** the tool-holder piece (37) has a circular plate (39) with a plurality of alveoli (45) in it removably housing certain types of tool (25 to 27, 49 to 51) and whose top face (39b) is surmounted vertically at its centre by a hollow barrel (43) with an approximately cylindrical overall shape and which emerges in the bottom face (39a) of the plate (39) and on which there are remobably mounted other types of tool (17, 30), the assembly carrying the tools and formed by the plate (39) and the barrel (43) being mounted in the bowl (6) by engagement of the outlet (62) of the said barrel (43) around a central mount (10) extending vertically on the bottom (8) of the bowl (6) and able to receive the shaft (12) of the motor unit.

4. Domestic electrical appliance according to Claim 3, in which the tools are on the one hand a vegetable chopper (25), various types of grater (26) and the like which each consist of a working piece in the form of a circular sector coming to be inserted, when it is used, in a cutout (29) with the same shape formed in a disc (30) having a central opening (32), and on the other hand a knife (17) fixed to a tubular shaft (19) with an approximately cylindrical overall shape, **characterised in that** the pieces in the form of a sector (25, 26) are engaged vertically, through their narrowed part, through the alveoli (45) whose internal edges (53) retain the remaining part of the piece in the form of a sector, the knife-holder shaft (19) is slipped on the barrel (43) whilst leaving the top part of the latter free, and the disc (30) is slipped on the top part of the barrel (43) whilst coming into abutment on the top end (55) of the knife-holder shaft (19) and extending horizontally above the said pieces in the form of a sector (25, 26).

5. Domestic electrical appliance according to Claim 4, in which the knife (17) comprises two horizontal blades (21, 22) in the form of a crescent whose convex part constitutes the cutting part (21a, 22a), **characterised in that** the top face (39b) of the plate (39) is surmounted vertically by two convex protective flanges (57, 58) which respectively border the two cutting parts (21a, 22a) of the blades whilst standing up appreciably above these.

6. Domestic electrical appliance according to one of Claims 3 to 5, **characterised in that** the alveoli (45) have a rectangular overall shape, extending parallel to each other, and being distributed in two regions (46, 47) diametrically opposed with respect to the vertical axis (XX') of the barrel (43).

7. Domestic electrical appliance according to one of Claims 3 to 6, **characterised in that** the plate (39) is provided on its bottom face (39a) with a plurality of vertical lugs (41) coming into abutment on the bottom (8) of the bowl (6).

8. Domestic electrical appliance according to one of Claims 3 to 7, **characterised in that** a gripping member (60) is provided at the top end of the barrel (43).

9. Domestic electrical appliance according to any one of the preceding claims, **characterised in that** the tool-holder piece (37) is produced by moulding from a plastics material, such as a polypropylene.
